# EUROPEAN PATENT APPLICATION

(11) **EP 1 197 373 A2**
(43) Date of publication of application: **17.04.2002**
(21) Application number: 01124039.7
(22) Date of filing: 09.10.2001
(51) Int. Cl.: B60K 15/03, B60K 15/04

(54) **Plastic parts connected to a plastic fuel tank**

(30) Priority: 10.10.2000 JP 2000309320; 30.03.2001 JP 2001100955
(71) Applicant: Horie Kinzoku Kogyo Kabushiki Kaisha, Aichi-ken 471-8510 (JP)
(72) Inventor: Goto, Teijiro, Toyota-shi, Aichi-ken, 471-8510 (JP); Tachi, Toshiaki, Toyota-shi, Aichi-ken, 471-8510 (JP)
(74) Representative: Leson, Thomas Johannes Alois, Dipl.-Ing.

(57) **Abstract**

The present invention is directed to a plastic part (1) connected to an opening portion (24) of a plastic fuel tank (20). The plastic part (1) includes a body member (30) made of barrier plastic material for preventing the fuel from permeating through the body member (30), and a connecting member (40) made of adhesive plastic material for covering at least a portion of the body member (30) and surrounding the opening portion (24) of the fuel tank (20). The connecting member (40) is formed integrally with the body member (30). The connecting member (40) is connected to the fuel tank (20), with the body member (30) pressed to contact the fuel tank (20) around the opening portion (24). The connecting member (40) has a protrusion (46) formed on a surface of the connecting member (40) connected to the body member (30). As for the protrusion, a step may be formed on an inner side surface of the connecting member (40).

## Description

### BACKGROUND OF THE INVENTION

### 1. Field of the Invention

The present invention relates to plastic parts connected to a plastic fuel tank, more particularly to the plastic parts connected to an opening portion of the plastic fuel tank for use in an automotive vehicle. Also, the present invention relates to a method for producing the plastic parts connected to the opening portion of the plastic fuel tank.

### 2. Description of the Related Arts

Recently, a fuel tank mounted on an automobile or the like tends to be made of plastic material, and a plastic fuel tank is popular now. With respect to the plastic material for forming the fuel tank, a sufficient barrier property has to be provided for preventing the fuel from permeating or passing through the tank. In Japanese Utility-model Laid-open Publication No.61-83509, for example, there is disclosed a blow molded fuel tank with multiple layers, using multiple plate members with a plurality of component plates adhered together through binding layers. More specifically, there is disclosed a structure, wherein a layer of barrier material for preventing the fuel from permeating through the tank is disposed between an inner layer and outer layer of high density polyethylene, and binding layers are disposed between those layers for binding them.

In general, the fuel tank is provided with a plurality of opening portions, to which various parts are connected directly, or through pipe joints. Likewise, the plastic fuel tank is formed with a plurality of opening portions, to which various parts are connected. With respect to a sealing property between the opening portions of the plastic fuel tank and the parts connected thereto, various measures are proposed. In Japanese Patent No.2906701, for example, there is disclosed a prior art, wherein a cylindrical portion is formed on a plastic tank body, and a fuel unit is disposed through a packing in the cylindrical portion, on which a cap member is screwed. In this Publication, it is proposed that an attaching member is connected to an peripheral portion of an opening by thermal welding in advance, and then the fuel unit is attached to the inside of the attaching member. Furthermore, in Japanese Utility-model Laid-open Publication No.2-10121, there is disclosed a connecting structure of a plastic tube for use in the connection of the plastic fuel tank with a filler tube. More specifically, a flange is formed integrally with the plastic tube, and an annular protrusion to be fitted into an opening or tube of a member to be connected is formed integrally with either the flange or the member to be connected, so that the flange is welded to the surface of the member to be connected.

According to those publications of No.2906701 and No.2-10121, the fuel unit is attached to the opening portion of the plastic tank (by the cap member), or the plastic tube is attached thereto, and the sealing property for the attachment has been considered. However, it has never been considered to prevent the fuel from permeating through the cap member and fuel unit, or the plastic tube. Although the amount of the fuel permeating through them may be relatively small, it is preferable to prevent the fuel from permeating those parts. As a countermeasure, it may be considered that the plastic parts such as the pipe joint attached to the opening portion of the plastic fuel tank can be made of plastic material having the barrier property for preventing the fuel from permeating through the material (hereinafter, simply referred to as the barrier material). However, it is impossible to connect the plastic part made of only the barrier material to the fuel tank directly. In this case, therefore, it may be considered to connect them through a packing having a proper characteristic for preventing the fuel from permeating through it. However, it is not easy to prevent the fuel from permeating through the parts and the like, because prevention of the fuel from permeating through them is not comparable to a simple prevention of the fuel from leaking through a mere clearance. The former requires a complicated structure, and the number of parts will be increased. Therefore, it is preferable to form the plastic parts to be connected to the plastic fuel tank with a sufficient barrier property, and connect the plastic parts to the plastic fuel tank directly, without any packing or the like disposed between them.

### SUMMARY OF THE INVENTION

Accordingly, it is an object of the present invention to provide plastic parts directly connected to an opening portion of a plastic fuel tank, to prevent the fuel from permeating through them effectively.

It is another object of the present invention to provide a method for producing the plastic parts directly connected to the opening portion of the plastic fuel tank, to prevent the fuel from permeating through them effectively.

In accomplishing the above and other objects, a plastic part connected to an opening portion of a plastic fuel tank includes a body member made of barrier plastic material for preventing the fuel from permeating through the body member, and a connecting member made of adhesive plastic material for covering at least a portion of the body member and surrounding the opening portion of the fuel tank. The connecting member is formed integrally with the body member and connected to the fuel tank.

Preferably, the connecting member is connected to the fuel tank, with the body member pressed to contact the fuel tank around the opening portion of the fuel tank.

The connecting member may be formed integrally with the body member to cover substantially the whole area of the opening portion of the fuel tank.

Preferably, the connecting member has a protrusion formed on a surface of the connecting member connected to the body member. The protrusion may include a step which is formed on an inner side surface of the connecting member connected to the body member. The connecting member may have a through hole for introducing the barrier plastic material to form the body member, and the connecting member may have an annular protrusion which is formed around the through hole on an inner surface of the connecting member connected to the body member.

Furthermore, the connecting member may have a plurality of steps which are formed in parallel with each other around an inner corner portion of the connecting member connected to the body member. Preferably, a step placed at the outermost of the connecting member out of the plurality of steps formed around the inner corner portion of the connecting member, may be exposed outside, with the outermost surface of the step exposed outside being placed on the same surface with a surface of the body member exposed outside.

A method for producing a plastic part connected to an opening portion of a plastic fuel tank may comprise the steps of forming a connecting member connected to the fuel tank for covering at least a portion of a body member and surrounding the opening portion of the fuel tank, with adhesive plastic material having a relatively low melting point and an adhesive property, and then forming the body member with barrier plastic material having a relatively high melting point and preventing the fuel from permeating through the body member, to be integral with the connecting member.

In the method as described above, the connecting member may be formed integrally with the body member to cover substantially the whole area of the opening portion of the fuel tank. The connecting member may be formed with a protrusion on a surface of the connecting member connected to the body member, and the body member may be formed integrally with the connecting member to include the protrusion. The connecting member may be formed on an inner surface thereof with a through hole, and formed with an annular protrusion around the through hole for introducing the barrier plastic material from the through hole to form the body member.

In the method as described above, a plurality of steps may be formed in parallel with each other around an inner corner portion of the connecting member connected to the body member. Preferably, a step placed at the outermost of the connecting member out of the plurality of steps formed around the inner corner portion of the connecting member, may be exposed outside, with the outermost surface of the step exposed outside being placed on the same surface with a surface of the body member exposed outside.

### BRIEF DESCRIPTION OF THE DRAWINGS

The above stated object and following description will become readily apparent with reference to the accompanying drawings, wherein like reference numerals denote like elements, and in which:
FIG.1 is a cross sectional view of a plastic part connected to a fuel tank according to a first embodiment of the present invention;
FIG.2 is a plan view of a bottom of a plastic part according to a first embodiment of the present invention;
FIG.3 is an enlarged cross sectional view of a portion of a plastic part according to a first embodiment of the present invention;
FIG.4 is a cross sectional view of a plastic part connected to a fuel tank according to a second embodiment of the present invention;
FIG.5 is a plan view of a bottom of a plastic part according to a second embodiment of the present invention;
FIG.6 is an enlarged cross sectional view of a portion of a plastic part according to a second embodiment of the present invention;
FIG.7 is an enlarged cross sectional view of another portion of a plastic part according to a second embodiment of the present invention;
FIG.8 is a cross sectional view of a plastic part connected to a fuel tank according to a third embodiment of the present invention;
FIG.9 is a plan view of a bottom of a plastic part according to a third embodiment of the present invention;
FIG.10 is an enlarged cross sectional view of a portion of a plastic part according to a third embodiment of the present invention;
FIG.11 is a cross sectional view of a plastic part connected to a fuel tank according to a fourth embodiment of the present invention;
FIG.12 is a plan view of a bottom of a plastic part according to a fourth embodiment of the present invention;
FIG.13 is an enlarged cross sectional view of a portion of a plastic part according to a fourth embodiment of the present invention;
FIG.14 is a cross sectional view of a plastic part connected to a fuel tank according to a fifth embodiment of the present invention;
FIG.15 is a plan view of a bottom of a plastic part according to a fifth embodiment of the present invention; and
FIG.16 is an enlarged cross sectional view of a portion of a plastic part according to a fifth embodiment of the present invention;

### DESCRIPTION OF THE PREFERRED EMBODIMENTS

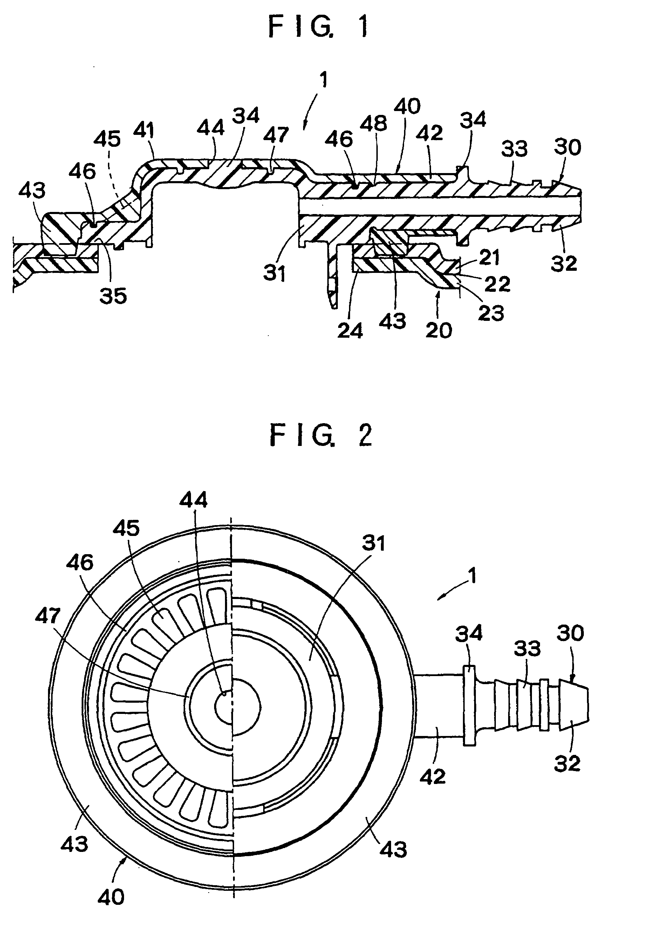

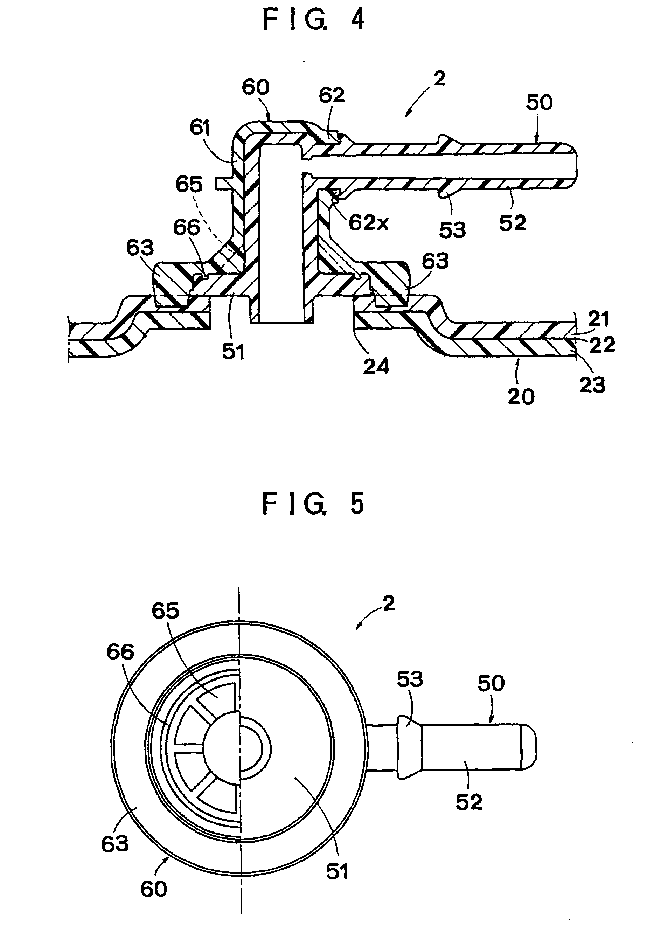

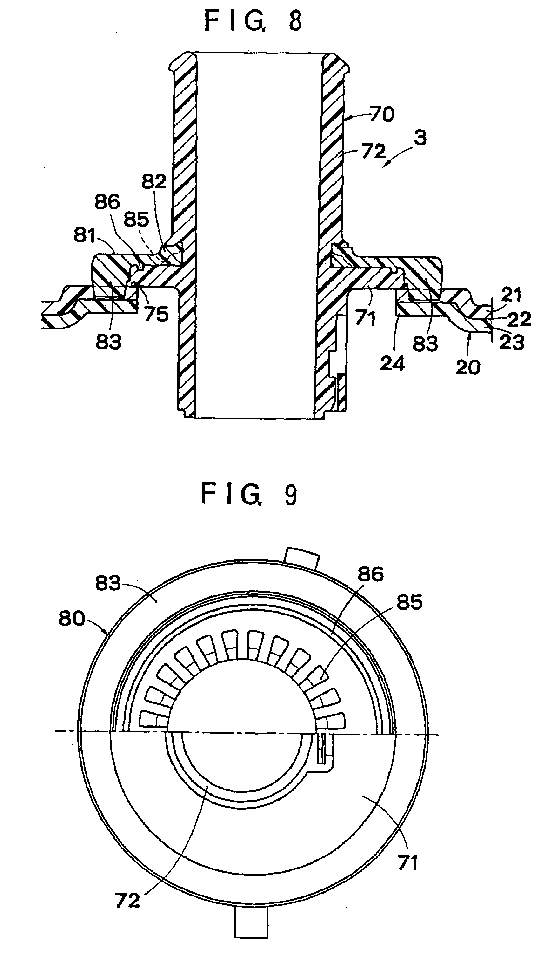

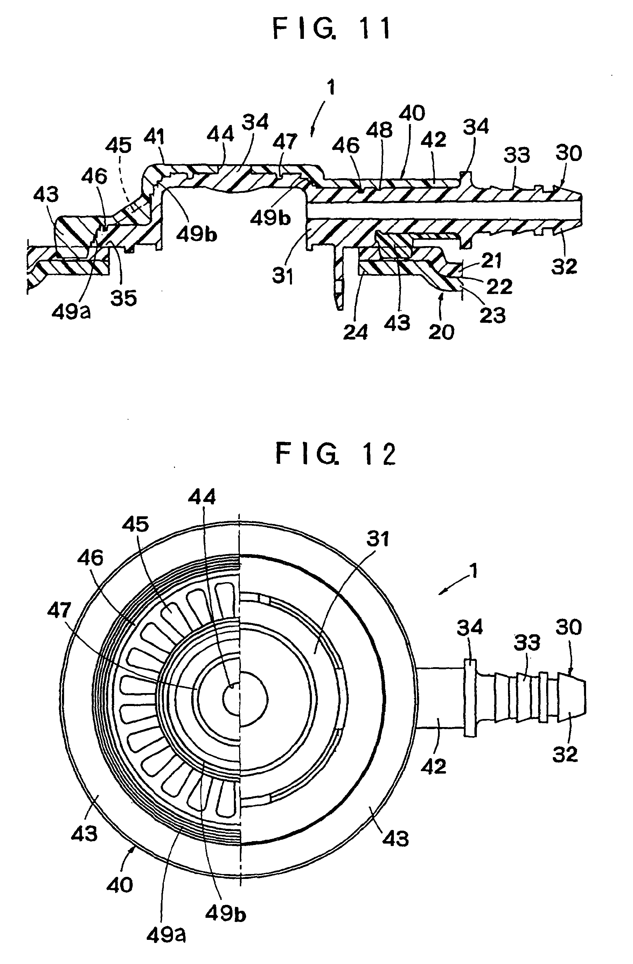

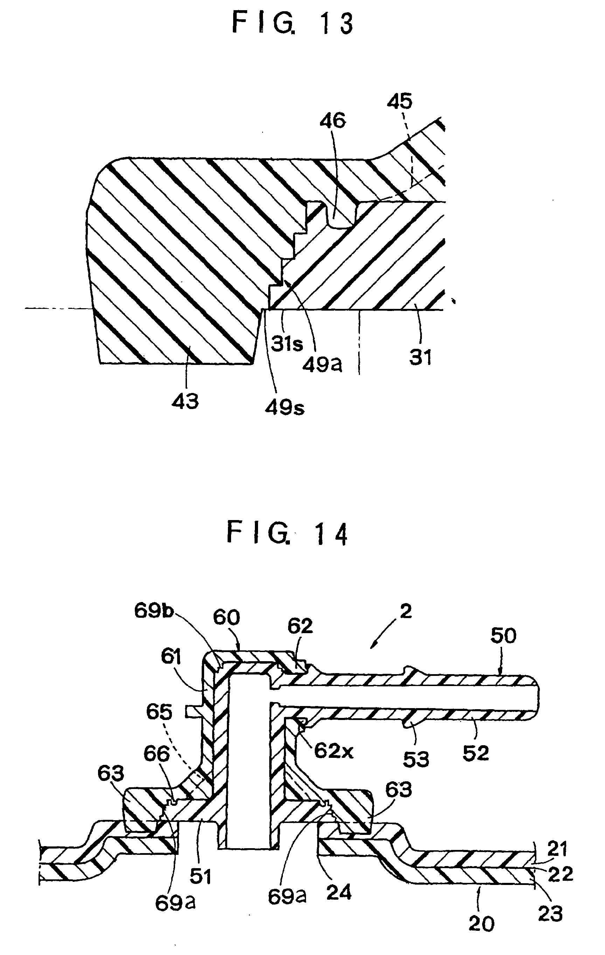

Various plastic parts are connected to an opening portion of a plastic fuel tank directly or through a pipe joint. Among them, a plastic part 1 as shown in FIGS.1-3 is provided for use as a cut-off valve (COV) for an automotive vehicle according to a first embodiment of the present invention. A plastic part 2 as shown in FIGS.4-7 is provided for use as a pipe joint for a connecting tube according to a second embodiment. And, a plastic part 3 as shown in FIGS.8-10 is provided for use as a pipe joint for an inlet according to a third embodiment. Furthermore, the plastic part 1 as shown in FIGS.11-13 is provided for use as the cut-off valve according to a fourth embodiment. And, the plastic part 2 as shown in FIGS.14-16 is provided for use as the pipe joint for the connecting tube according to a fifth embodiment.

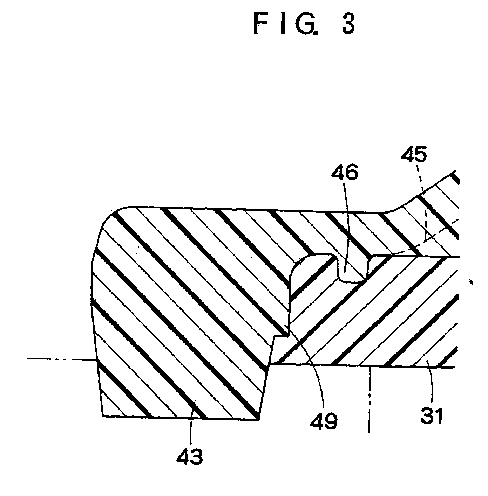

Referring to FIGS.1 and 2, there is illustrated the plastic part 1 connected to an opening portion 24 of the plastic fuel tank according to the first embodiment, a portion of which is sectioned and enlarged in FIG.3, while the overall figure of the fuel tank has been omitted herein for simplicity. A fuel tank body 20 is formed with multiple layers that include an outer layer 21 and an inner layer 23, both of which are formed with strength holding material, and include an intermediate layer 22 which is formed with the barrier material, and disposed between them. These layers are bound together with adhesive plastic. As for the strength holding material for forming the outer layer 21 and inner layer 23, ultra high polymeric (high density) polyethylene is used. As for the barrier material for forming the intermediate layer 22, EVOH (i.e., plastic with ethylene and vinyl-alcohol co-polymerized) is used, for example. According to the present invention, however, the materials are not limited to those as described above, but may be employed any materials which can prevent the fuel of gasoline or the like from permeating through them, to provide effective gas-barrier property.

On the other hand, the plastic part 1 is formed as shown in FIGS.1 and 2, and connected to the fuel tank body 20 so as to surround its opening portion 24. A portion of the plastic part 1 is sectioned and enlarged in FIG.3. The plastic part 1 includes a body member 30 made of the barrier material and a connecting member 40 made of adhesive plastic material (hereinafter, simply referred to as adhesive material). The connecting member 40 is formed integrally with the body portion 30, covering a portion thereof by the method as will be described later.

According to the present embodiment, the barrier material for forming the body member 30 is made by compounding liquid crystal polymer (LCP) with polyamide base, polybutylene terephthalate (PBT) or polyphenylene sulfite (PPS). The adhesive material for forming the connecting member 40 according to the present embodiment is maleic-modified polyethylene which causes the chemical bonding with polyamide, and is placed on sale.

As shown in FIG.1, the body member 30 includes a hut-like cover portion 31 having a circular outer configuration approximately concentric with the opening portion 24 of the fuel tank body 20, and a connecting pipe 32 extending outward in a radial direction of the cover portion 31. In the body member 30, the hollow space of the cover portion 31 is communicated with the hollow space of the connecting pipe 32. An engaging portion 33 is formed on the peripheral surface of the connecting pipe 32 to extend from the tip end thereof to an approximately intermediate portion of the connecting pipe 32 toward the cover portion 31, and a flange portion 34 is formed on the approximately intermediate portion of the connecting pipe 32.

The connecting member 40 is formed integrally with the body member 30 to cover the same, and formed with a hut-like cover portion 41 for covering the cover portion 31, and a pipe portion 42 extending outward in a radial direction of the cover portion 41. And, an annular wall portion 43 is formed on the connecting member 40 extending outward to be welded and connected to the fuel tank body 20, around a portion corresponding to a brim of the hut-like cover portion 41. A through hole 44 is formed on the center of the tip end surface of the cover portion 41, to be filled with the barrier material for forming the body member 30. For connecting the cover portion 41 to a step portion of the cover portion 31, an edge portion is formed on the inner surface of the cover portion 41 to extend toward the connecting surface with the cover portion 31, around approximately the whole periphery of the cover portion 41 except for the pipe portion 42. On the edge portion, a plurality of grooves 45 are formed in a radial direction from the center of cover portion 41, as shown in FIG.2. Therefore, the grooves 45 are filled with the barrier material forming the body member 30, to be firmly connected thereto. As a result, the contacting area between the body member 30 and the connecting member 40 is made large, thereby to ensure an appropriate connecting strength.

According to the present embodiment, an annular protrusion 46 is formed on the inner surface of the cover portion 41. It is preferable to form the annular protrusion 46 with a diameter thereof greater than the diameter of the opening portion 24 as in the present embodiment, while the diameter of the annular protrusion 46 may be the same as the diameter of the opening portion 24, or smaller than the same. In addition, an annular protrusion 47 is formed on the inner surface of the cover portion 41, around the through hole 44 formed in the cover portion 41. Also, an annular protrusion 48 is formed on the inner surface of the pipe portion 42, around the longitudinal axis of the connecting pipe 32. On the outer surfaces of the cover portion 31 and connecting pipe 32, annular grooves (reference numeral omitted) will be formed at the positions to contact with the annular protrusions 46, 47, 48, when the body member 30 is formed integrally with the connecting member 40, as will be described later. With those annular protrusions and annular grooves, therefore, the connecting member 40 and the body member 30 are firmly connected together, to ensure an appropriate sealing property, and prevent them from being separated in a radial direction, effectively.

As shown in FIG.3, a step 49 is formed on the inner side surface of the connecting member 40, around the whole periphery thereof, and embedded in the barrier material for forming the body member 30, so that the step 49 serves as the protrusion according to the present invention. This step 49 is formed at the tip end thereof with the edge portion, which is welded to the body member 30, whereby the connecting member 40 and the body member 30 are firmly connected together. According to the present embodiment, the tip end of the pipe portion 42 of the connecting member 40 is formed to contact with the side surface of the flange portion 34 of the connecting pipe 32, and the tip end of the pipe portion 42 is welded to the flange portion 34, so that it is firmly connected to the body member 30.

Accordingly, the plastic part 1 as formed above is firmly connected to the fuel tank body 20, with the wall portion 43 of the connecting member 40 thermally welded to the outer layer 21 of the fuel tank body 20, in such a state that the outer peripheral portion 35 of the body member 30 surrounding the opening portion 24 is pressed onto the outer layer 21. Consequently, the outer peripheral portion 35 of the body member 30 is pressed to contact the outer layer 21, around the whole periphery of the opening portion 24. According to the present embodiment, therefore, the connecting member 40 and the body member 30 are firmly connected together, without any clearance caused between them, and the outer peripheral portion 35 of the body member 30 is pressed to contact the outer layer 21, so that an appropriate sealing property is ensured to prevent the fuel from leaking or permeating. Furthermore, the cover portion 41 of the connecting member 40 are formed integrally with the fuel tank body 20 to surround substantially the whole area covering the opening portion 24 of the fuel tank body 20, as shown in FIG.1 and 2. When the plastic part 1 connected to the fuel tank body 20 contacts with other parts, therefore, a contacting impact can be reduced appropriately.

Next will be explained a method for producing the plastic part 1 as constituted above. At the outset, the connecting member 40 is formed into the configuration as shown in FIGS.1 and 2, with the adhesive material having the melting point lower than that of the barrier material for forming the body member 30. Consequently, the cover portion 41, pipe portion 42 and wall portion 43 are formed, and the through hole 44 is formed on the center of the tip end of the cover portion 41. On the inner surface of the connecting member 40, the annular protrusions 46, 47, 48 are formed. Furthermore, the step 49 is formed on the inner side surface of the connecting member 40, and a plurality of grooves 45 are formed on the edge portion in a radial direction.

Next, the barrier material having the melting point higher than that of the connecting member 40 is introduced into the inside of the connecting member 40 through the through hole 44, whereby the body member 30 is formed with the barrier material to be integral with the connecting member 40, so that the connecting member 40 results in covering a portion of the body member 30. Then, the annular grooves (reference numeral omitted) are formed at the positions to contact with the annular protrusions 46, 47, 48. In this case, the barrier material is guided by the plurality of grooves 45 to be introduced into the inside of the connecting member 40. Therefore, the material can be reached easily and certainly to the outer peripheral portion 35 of the body member 30, so that a large contacting surface can be ensured between the body member 30 and the connecting member 40. Accordingly, the barrier material is filled into the plurality of grooves 45, including the annular protrusions 46, 47, 48, to connect the body member 30 and the connecting member 40 firmly. Furthermore, according to the present embodiment, the edge portions are formed on the tip ends of the annular protrusions 46, 47, 48 and the step 49, and the body member 30 is formed with the barrier material of high melting point, including the annular protrusions 46, 47, 48 and the step 49. Therefore, the connecting member 40 and the body member 30 are connected firmly, as shown in FIG.3, which enlarges the connected area of the annular protrusion 46 and the step 49. In this method, any molding processes may be employed, such as insert molding or blow molding. However, the order of processes is opposite to that employed in an ordinary prior method, so that the significant effect of the present invention can be obtained.

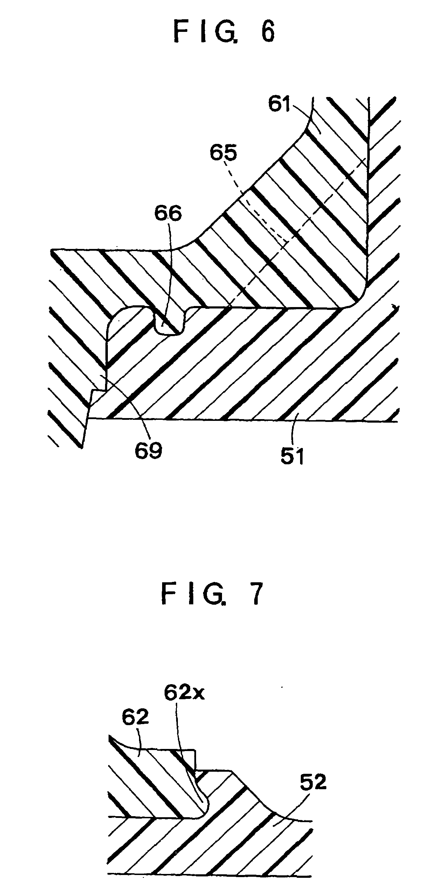

FIGS.4-7 show the plastic part 2 according to the second embodiment, which is used for the pipe joint for the connecting tube. The plastic part 2 is constituted as shown in FIGS.4 and 5, produced in the same manner as the embodiment as described heretofore, and connected to another opening portion of the fuel tank body 20. Therefore, the elements which are substantially the same as those shown in FIGS.1-3 are designated by corresponding last digit reference numerals with different ten-series numerals, by changing "3" in FIGS.1-3 to "5" in FIGS.4-7, and changing "4" to "6" as well. FIG.6 is an enlarged figure showing the connected portion between a cover portion 51 of a body member 50 and a cover portion 61 of a connecting member 60.

In the second embodiment, there is not the through hole 44 formed on the tip end of the cover portion 41 as shown in FIGS.1 and 2, nor a portion corresponding to the flange portion 34 formed on the connecting pipe 32 in FIGS.1 and 2. According to the second embodiment, an annular protrusion 62x is formed on the end face of a pipe portion 62, and the tip end of an annular protrusion 62x is welded to the body member 50, so that the pipe portion 62 is firmly connected to the body member 50. The method for producing the plastic part 2 according to the second embodiment is substantially the same as the method for producing the plastic part 1 as shown in FIGS.1-3, the explanation of the former method is omitted herein.

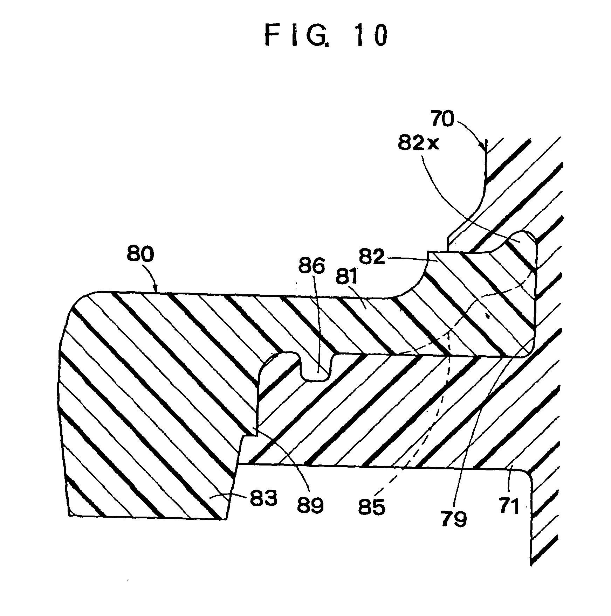

FIGS.8-10 show the plastic part 3 according to the third embodiment, which is used for the pipe joint for the inlet. The plastic part 3 is constituted as shown in FIGS.8-10, produced in the same manner as described in the second embodiment with reference to FIGS.4-7, and connected to a further opening portion of the fuel tank body 20. Therefore, the elements which are substantially the same as those shown in FIGS.4-7 are designated by corresponding last digit reference numerals with different ten-series numerals, by changing "5" in FIGS.4-7 to "7" in FIGS.8-10, and changing "6" to "8" as well. In the third embodiment, there is not the through hole 44 formed on the tip end of the cover portion 41 as shown in FIGS.1 and 2, nor a portion corresponding to the flange portion 34 formed on the connecting pipe 32 in FIGS.1 and 2. According to the third embodiment, the wall thickness of a portion of a connecting pipe 72 of a body member 70 extending outside of the fuel tank body 20 is made greater than the wall thickness of a portion of the connecting pipe 72 extending inside of the fuel tank body 20. As a result, as shown in FIG.10, there is formed an annular recess 79, into which the central portions of a cover portion 81 and a cylindrical portion 82 of a connecting member 80 are fitted. And, an annular protrusion 82x is formed on the end face of the cylindrical portion 82, and the tip end of the annular protrusion 82x is welded to the body member 70, so that the cylindrical portion 82 is firmly connected to the body member 70. The method for producing the plastic part 3 according to the third embodiment is substantially the same as the method for producing the plastic part 2 as shown in FIGS.4-7, the explanation of the former method is omitted herein.

FIGS.11-13 show the plastic part 1 according to the fourth embodiment, which is used for the cut-off valve, and which has substantially the same structure as the one provided as the first embodiment in FIGS.1-3, except for a plurality of steps 49a and 49b as shown in FIGS.11-13. That is, according to the fourth embodiment, the plastic part 1 further includes a plurality of steps 49a, which are formed in parallel with each other around substantially the whole periphery of the inner corner portion of the wall portion 43 positioned at the opening of the connecting member 40, except for a portion connected to the connecting pipe 32. Also, a plurality of steps 49b are formed in parallel with each other around the whole periphery of the inner corner portion of the cover portion 41 positioned at the bottom of the connecting member 40. The width of those steps 49a and 49b is preferably to be set in a range of 0.3-0.7 mm.

Accordingly, as shown in FIG.13, the barrier material for forming the body member 30 is filled therein to include the plurality of steps 49a. The steps 49a, 49b are formed at the tip ends thereof with the edge portions, which are welded to the connecting member 40, whereby the connecting member 40 and the body member 30 are firmly connected together. According to the present embodiment, a step placed at the outermost of the connecting member 40, out of the plurality of steps 49a is exposed outside, with the outermost surface 49s of the step exposed outside being placed on the same surface with the outer surface 31s of the cover portion 31 of the body member 30 exposed outside as shown in FIG.13. Therefore, it is possible to prevent burs from being made on a connecting portion between the steps 49a and the cover portion 31, and provide a smooth outer surface. In the present embodiment, therefore, the body member 30 and the connecting member 40 are connected firmly without causing any space between them, because of the plurality of steps 49a and 49b.

With respect to a method for producing the plastic part 1 as shown in FIGS.11-13, it is produced in substantially the same manner as the method for producing the plastic part 1 as shown in FIGS.1-3. At the outset, the connecting member 40 is formed into the configuration as shown in FIGS.11 and 12, with the adhesive material having the melting point lower than that of the barrier material for forming the body member 30. Consequently, the cover portion 41, pipe portion 42 and wall portion 43 are formed, and the through hole 44 is formed on the center of the tip end of the cover portion 41. On the inner surface of the connecting member 40, the annular protrusions 46, 47, 48 are formed. In addition, according to the present embodiment, the plurality of the steps 49a are formed around substantially the whole periphery of the inner corner portion of the cover portion 41, and the plurality of the steps 49b are formed around the whole periphery of the inner corner portion of the wall portion 43, and the plurality of grooves 45 are formed on the edge portions in a radial direction.

Next, the barrier material having the melting point higher than that of the connecting member 40 is introduced into the inside of the connecting member 40 through the through hole 44, whereby the body member 30 is formed with the barrier material to be integral with the connecting member 40, so that the connecting member 40 results in covering a portion of the body member 30. Then, the barrier material is filled into the plurality of grooves 45, including the annular protrusions 46, 47, 48 and the steps 49a, 49b, to connect the body member 30 and the connecting member 40 firmly. Furthermore, according to the present embodiment, the edge portions are formed on the tip ends of the annular protrusions 46, 47, 48 and the steps 49a, 49b, and the body member 30 is formed with the barrier material of high melting point, including the annular protrusions 46, 47, 48 and the steps 49a, 49b. Therefore, the connecting member 40 and the body member 30 are connected firmly, as shown in FIG.13, which enlarges the connected area of the annular protrusions 46, 47, 48, and steps 49a.

FIGS.14-16 show the plastic part 2 according to the fifth embodiment, which is used for the pipe joint for the connecting tube, and which has substantially the same structure as the one provided as the second embodiment in FIGS.4-7, except for a plurality of steps 69a as shown in FIGS.14-16. That is, according to the fifth embodiment, the plastic part 2 further includes a plurality of steps 69a (instead of the step 69 in FIG.6), which are formed in parallel with each other around substantially the whole periphery of the inner corner portion of the wall portion 63. Also, a plurality of steps 69b are formed in parallel with each other around the whole periphery of the inner corner portion of the cover portion 61 positioned at the bottom of the connecting member 60.

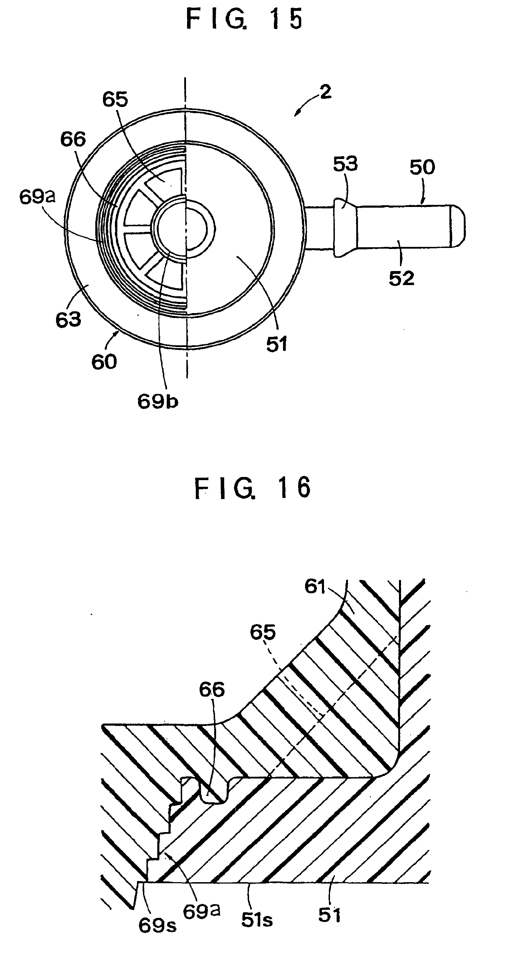

Accordingly, the barrier material for forming the body member 50 is filled therein to include the plurality of steps 69a, 69b. The steps 69a, 69b are formed at the tip end thereof with the edge portions, which are welded to the connecting member 60, whereby the connecting member 60 and the body member 50 are firmly connected together. According to the present embodiment, a step placed at the outermost of the connecting member 60, out of the plurality of steps 69a is exposed outside, with the outermost surface 69s of the step exposed outside being placed on the same surface with the outer surface 51s of the cover portion 51 of the body member 50 exposed outside as shown in FIG.16. Therefore, it is possible to prevent burs from being made on a connecting portion between the steps 69a and the cover portion 51, and provide a smooth outer surface. In the present embodiment, therefore, the body member 50 and the connecting member 60 are connected firmly without causing any space between them, because of the plurality of steps 69a and 69b.

The present invention is directed to a plastic part (1) connected to an opening portion (24) of a plastic fuel tank (20). The plastic part (1) includes a body member (30) made of barrier plastic material for preventing the fuel from permeating through the body member (30), and a connecting member (40) made of adhesive plastic material for covering at least a portion of the body member (30) and surrounding the opening portion (24) of the fuel tank (20). The connecting member (40) is formed integrally with the body member (30). The connecting member (40) is connected to the fuel tank (20), with the body member (30) pressed to contact the fuel tank (20) around the opening portion (24). The connecting member (40) has a protrusion (46) formed on a surface of the connecting member (40) connected to the body member (30). As for the protrusion, a step may be formed on an inner side surface of the connecting member (40).

## Claims

1. A plastic part connected to an opening portion of a plastic fuel tank, comprising:
a body member made of barrier plastic material for preventing the fuel from permeating through said body member; and
a connecting member made of adhesive plastic material for covering at least a portion of said body member and surrounding the opening portion of said fuel tank, said connecting member being formed integrally with said body member and connected to said fuel tank.

2. The plastic part according to claim 1, wherein said connecting member is connected to said fuel tank, with said body member pressed to contact said fuel tank around the opening portion of said fuel tank.

3. The plastic part according to claim 1, wherein said connecting member is formed integrally with said body member to cover substantially the whole area of the opening portion of said fuel tank.

4. The plastic part according to claim 1, wherein said connecting member has a protrusion formed on a surface of said connecting member connected to said body member.

5. The plastic part according to claim 4, wherein said protrusion includes an annular protrusion formed on an inner surface of said connecting member connected to said body member.

6. The plastic part according to claim 4, wherein said protrusion includes a step formed on an inner side surface of said connecting member connected to said body member.

7. The plastic part according to claim 1, wherein said connecting member has a through hole for introducing the barrier plastic material to form said body member, and wherein said connecting member has an annular protrusion formed around said through hole on an inner surface of said connecting member connected to said body member.

8. The plastic part according to claim 1, wherein said connecting member has an edge portion formed around the inner periphery thereof to extend toward a connecting surface thereof to said body member, and wherein said edge portion has a plurality of grooves formed thereon in a radial direction and filled with the barrier plastic material of said body member.

9. The plastic part according to claim 1, wherein said connecting member has a plurality of steps formed in parallel with each other around an inner corner portion of said connecting member connected to said body member.

10. The plastic part according to claim 9, wherein a step placed at the outermost of said connecting member, out of said plurality of steps formed around the inner corner portion of said connecting member, is exposed outside, with the outermost surface of said step exposed outside being placed on the same surface with a surface of said body member exposed outside.

11. A method for producing a plastic part connected to an opening portion of a plastic fuel tank, comprising:
forming a connecting member connected to said fuel tank for covering at least a portion of a body member, and surrounding the opening portion of said fuel tank, with adhesive plastic material having a relatively low melting point and an adhesive property; and then
forming said body member with barrier plastic material having a relatively high melting point and preventing the fuel from permeating through said body member, to be integral with said connecting member.

12. The method according to claim 11, wherein said connecting member is formed integrally with said body member to cover substantially the whole area of the opening portion of said fuel tank.

13. The method according to claim 11, wherein said connecting member is formed with a protrusion on a surface of said connecting member connected to said body member, and wherein said body member is formed integrally with said connecting member to include said protrusion.

14. The method according to claim 13, wherein an edge portion is formed on a tip end of said protrusion.

15. The method according to claim 11, wherein said connecting member is formed on an inner surface thereof with a through hole, and formed with an annular protrusion around said through hole for introducing the barrier plastic material from said through hole to form said body member.

16. The method according to claim 15, wherein an edge portion is formed on a tip end of said annular protrusion.

17. The method according to claim 11, wherein an edge portion extending toward a connecting surface of said connecting member to said body member is formed around the inner periphery of said connecting member, and wherein a plurality of grooves are formed on said edge portion in a radial direction and filled with the barrier plastic material of said body member to form said connecting member to be integral with said body member.

18. The method according to claim 11, wherein a plurality of steps are formed in parallel with each other around an inner corner portion of said connecting member connected to said body member.

19. The method according to claim 18, wherein a step placed at the outermost of said connecting member, out of said plurality of steps formed around the inner corner portion of said connecting member, is exposed outside, with the outermost surface of said step exposed outside being placed on the same surface with a surface of said body member exposed outside.
